**Europäisches Patentamt**

**European Patent Office**

**Office européen des brevets**

(19)

(11) Veröffentlichungsnummer : **0 355 269 B1**

(12) **EUROPÄISCHE PATENTSCHRIFT**

(45) Veröffentlichungstag der Patentschrift :
**26.08.92 Patentblatt 92/35**

(21) Anmeldenummer : **89108290.1**

(22) Anmeldetag : **09.05.89**

(51) Int. Cl.⁵ : **F16F 13/00**

(54) **Hydraulisch dämpfendes Gummilager.**

(30) Priorität : **17.08.88 DE 3827905**

(43) Veröffentlichungstag der Anmeldung :
**28.02.90 Patentblatt 90/09**

(45) Bekanntmachung des Hinweises auf die
Patenterteilung :
**26.08.92 Patentblatt 92/35**

(84) Benannte Vertragsstaaten :
**BE FR GB IT NL SE**

(56) Entgegenhaltungen :
**EP-A- 0 278 801
DE-A- 2 844 424**

(56) Entgegenhaltungen :
**DE-C- 2 841 505
GB-A- 2 165 027
PATENT ABSTRACTS OF JAPAN, Band 10, Nr.
62 (M-460)[2119], 12. März 1986; & JP-A-60 208
652 (TOUKAI GOMU K.K.)**

(73) Patentinhaber : **Boge A.G.
Bogestrasse 50
W-5208 Eitorf/Sieg (DE)**

(72) Erfinder : **Schmidt, Kurt
Ringstrasse 34
W-5483 Heimersheim (DE)**
Erfinder : **Waloszyk, Detlef
Minartzstrasse 8
W-5177 Titz-Rödingen (DE)**

## Beschreibung

Die Erfindung betrifft ein hydraulisch dämpfendes Gummilager bestehend aus einem Innenrohr, einem konzentrisch oder exzentrisch dazu mit Abstand angeordneten Außenrohr und dazwischen eingesetztem Gummiteil, in welchem mindestens zwei dämpfungsmittelgefüllte Kammern angeordnet sind, wobei mindestens zwei Kammern über eine Strömungsverbindung miteinander verbunden sind.

Es sind Gummilager bekannt (z.B. DE-C- 28 41 505), die aus einem Innenrohr, einem konzentrisch oder exzentrisch dazu mit Abstand angeordneten Außenrohr und dazwischen eingesetztem Gummiteil bestehen, wobei im Gummiteil dämpfungsmittelgefüllte, hydraulisch miteinander verbundene Kammern vorgesehen sind. Bei derartigen Gummilagern hat sich in der Praxis herausgestellt, daß unter bestimmten Betriebsbedingungen eine verringerte Dämpfung zwischen zwei miteinander verbundenen Kammern auftreten kann. Es wurde festgestellt, daß beipielsweise Kavitation in den druckentlasteten Kammern auftreten kann. Darüber hinaus ist die Bildung von Gasblasen bei Erwärmung der Dämpfungsflüssigkeit im Dauerbetrieb festgestellt worden.

Für den Fall, daß aus konstruktiver Notwendigkeit unterschiedliche Kammergrößen erforderlich sind, kann es im Betrieb des Gummilagers zu Unterdrücken in der kleineren Kammer je nach Verformung des Gesamtteiles kommen.

Aufgabe der Erfindung ist es, bei einem Gummilager eine eventuell auftretende Kavitation und/oder die Bildung von Gasblasen in der Dämpfungsflüssigkeit wie auch einen Unterdruck in den Kammern zu verringern.

Zur Lösung dieser Aufgabe ist erfindungsgemäß vorgesehen, daß das Dämpfungsmittel in den Kammern mit einen überdruck beaufschlagt ist.

Vorteilhaft ist hierbei, daß durch Vermeidung von Kavitation in der druckentlasteten Kammer die Dämpfung beibehalten wird. Ebenfalls läßt sich die Bildung von Gasblasen herabsetzen, wie auch ein statischer Unterdruck bei unterschiedlichen Kammerverformungen vermeiden. Diese erwähnten Vorteile verhindern, daß die Dämpfung während des Betriebes des Gummilagers verringert wird.

Nach einem weiteren wesentlichen Merkmal ist vorgesehen, daß das Dämpfungsmittel mit überdruck injiziert wird.

Eine weitere Ausführungsform sieht vor, daß das Dämpfungsmittel über eine Einfüllöffnung eingebracht wird, welche nach Aufbringen des überdruckes auf das Dämpfungsmittel verschlossen wird.

Eine weitere Ausgestaltung der Erfindung sieht vor, daß nach der Montage des Gummiteiles und dem Füllen der Kammern mit Dämpfungsmittel das Außenrohr im Durchmesser zum Erzeugen eines überdruckes kalibriert wird.

Bevorzugte Ausführungsbeispiele der Erfindung sind in den Zeichnungen schematisch dargestellt.

Es zeigt:

Figur 1 und 2 ein hydraulisch dämpfendes Gummilager im Schnitt mit zwei dämpfungsmittelgefüllten Kammern

Figur 3 und 4 eine weitere Ausführungsform eines Gummilagers im Schnitt, bei dem insgesamt vier Kammern vorgesehen sind

Figur 5 ein Gummilager im Schnitt, bei dem eine Einfüllöffnung vorgesehen ist.

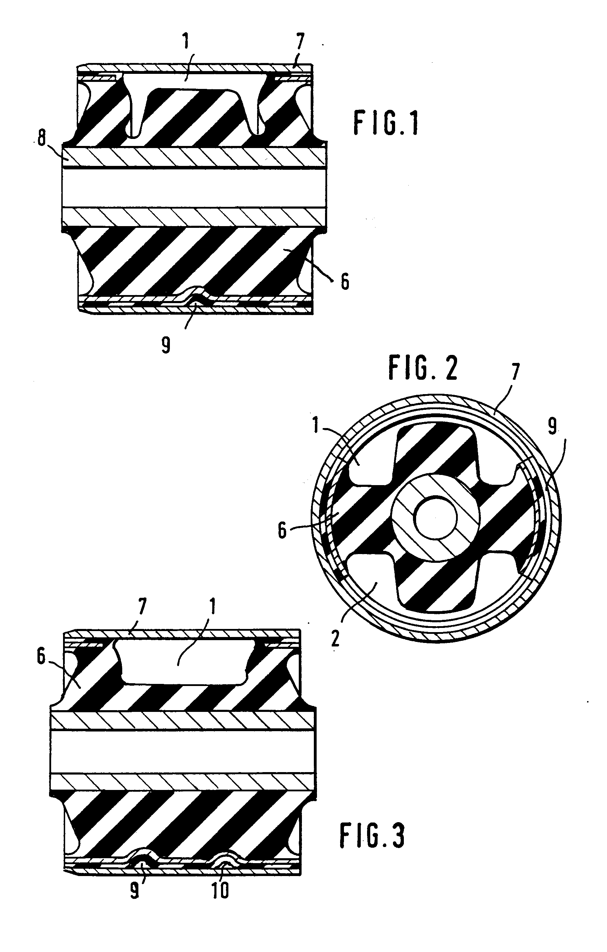

Das in Figur 1 dargestellte hydraulische dämpfende Gummilager besteht im wesentlichen aus dem Innenrohr 8 und einem im Abstand dazu konzentrisch angeordneten Außenrohr 7, wobei das dazwischen eingesetzte Gummiteil 6 dämpfungsmittelgefüllte Kammern 1,2 aufweist. Das Dämpfungsmittel in den Kammern 1,2 ist mit einem überdruck beaufschlagt.

In der Figur 2 ist zu erkennen, daß die Kammern 1 und 2 durch eine Strömungsverbindung 9 verbunden sind.

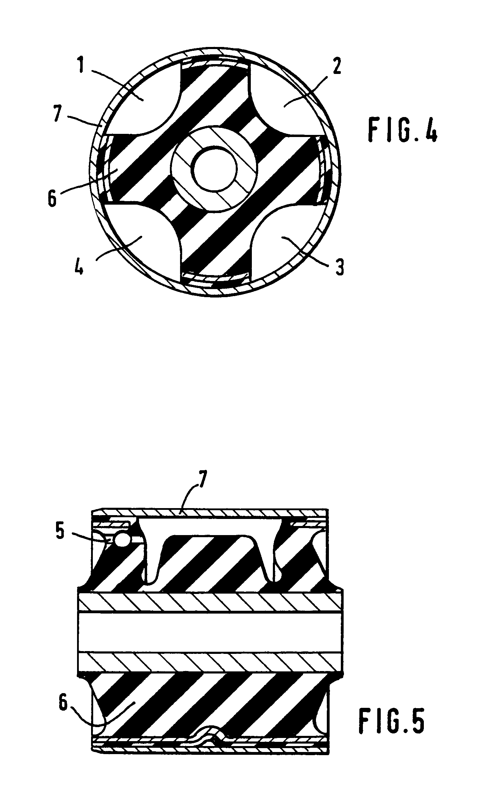

Die Figuren 3 und 4 zeigen eine weitere Variante mit den dämpfungsmittelgefüllten Kammern 1,2,3,4, wobei auch hier eine Strömungsverbindung 9 bzw. 10 die Kammern miteinander verbindet.

Das Ausführungsbeispiel der Figur 5 sieht im Gummiteil 6 eine Einfüllöffnung 5 vor, die zum Einbringen des Dämpfungsmittels in die Kammer 1 dient und die nach Aufbringen eines überdruckes auf das Dämpfungsmittel verschlossen wird.

Bezugzeichenliste

1 - Kammer

2 - Kammer

3 - Kammer

4 - Kammer

5 - Einfüllöffnung

6 - Gummiteil

7 - Außenrohr
8 - Innenrohr
9 - Strömungsverbindung
10 - Strömungsverbindung

## Patentansprüche

1. Hydraulisch dämpfendes Gummilager bestehend aus einem Innenrohr (8), einem konzentrisch oder exzentrisch dazu mit Abstand angeordneten Außenrohr (7) und dazwischen eingesetztem Gummiteil (6), in welchem mindestens zwei dämpfungsmittelgefüllte Kammern (1,2,3,4) angeordnet sind, wobei mindestens zwei Kammern (1,2,3,4) über eine Strömungsverbindung (9,10) miteinander verbunden sind,
dadurch gekennzeichnet,
daß das Dämpfungsmittel in den Kammern (1,2,3,4) mit einem überdruck beaufschlagt ist.

2. Verfahren zur Herstellung eines Gummilagers nach Anspruch 1,
dadurch gekennzeichnet,
daß das Dämpfungsmittel mit überdruck injiziert wird.

3. Verfahren zur Herstellung eines Gummilagers nach Anspruch 1,
dadurch gekennzeichnet,
daß das Dämpfungsmittel über eine Einfüllöffnung (5) eingebracht wird, welche nach Aufbringen des überdruckes auf das Dämpfungsmittel verschlossen wird.

4. Verfahren zur Herstellung eines Gummilagers nach Anspruch 1,
dadurch gekennzeichnet,
daß nach der Montage des Gummiteiles (6) und dem Füllen der Kammern (1,2,3,4) mit Dämpfungsmittel das Außenrohr (7) im Durchmesser zum Erzeugen eines überdruckes in der Flüssigkeit kalibriert wird.

## Claims

1. Hydraulically damped rubber mounting comprising an inner tube (8), an outer tube (7) arranged spaced from it concentrically or eccentrically and a rubber component (6) introduced between them, in which are arranged at least two chambers (1,2,3,4) filled with damping medium, at least two chambers (1,2,3,4) being connected together through a flow path (9,10),
characterised in that
the damping medium in the chambers (1,2,3,4) is subjected to a positive or excess pressure.

2. Method of manufacturing a rubber mounting according to claim 1,
characterised in that
the damping medium is injected under positive pressure.

3. Method of manufacturing a rubber mounting according to claim 1,
characterised in that
the damping medium is introduced through a filling opening (5) which is closed off after the application of the positive pressure to the damping medium.

4. Method of manufacturing a rubber mounting according to claim 1,
characterised in that
after assembly of the rubber component (6) and filling of the chambers (1,2,3,4) with damping medium the outer tube (7) is reduced in diameter to produce a positive pressure in the liquid.

## Revendications

1. Support en caoutchouc à amortissement hydraulique composé d'un tube intérieur (8), d'un tube extérieur (7) disposé concentriquement ou excentriquement au premier à un certain écartement et un élément en caoutchouc (6) interposé entre eux, dans lequel sont disposées au moins deux chambres (1, 2, 3, 4) remplies d'un fluide d'amortissement, au moins deux chambres étant reliées l'une à l'autre par une liaison d'écoulement du fluide (9, 10),
caractérisé en ce que le fluide d'amortissement contenu dans les chambres (1, 2, 3, 4) est chargé par une surpression.

2. Procédé de fabrication d'un support en caoutchouc selon la revendication 1,
caractérisé
en ce que le fluide d'amortissement est injecté sous surpression.

3. Procédé de fabrication d'un support en caoutchouc selon la revendication 1,
caractérisé
en ce que le fluide d'amortissement est introduit à travers une ouverture de remplissage (5) qui est obturée après l'application de la surpression au fluide d'amortissement.

4. Procédé de fabrication d'un support en caoutchouc selon la revendication 1,
caractérisé
en ce qu'après le montage du support en caoutchouc (6) et après le remplissage des chambres (1, 2, 3, 4) avec le fluide d'amortissement, le tube extérieur (7) est calibré en diamètre pour produire la surpression dans le liquide.

FIG.1

FIG. 2

FIG.3

FIG.4

FIG.5